# EUROPEAN PATENT APPLICATION

(11) **EP 4 679 051 A1**
(43) Date of publication of application: **14.01.2026**
(21) Application number: 24187573.1
(22) Date of filing: 10.07.2024
(51) Int. Cl.: G01M 11/02, G03B 43/00, H04N 17/00, G03B 21/28

(54) **DEVICE FOR PROJECTING OF A VIRTUAL IMAGE FOR CALIBRATION OF AN OPTICAL SYSTEM AND METHOD THEREOF**

(71) Applicant: Robert Bosch GmbH, 70442 Stuttgart (DE)
(72) Inventor: Carvalho, Hugo, 3880-728 Ovar Ovar (PT); Marques, Filipe, 3880-728 Ovar Ovar (PT); Sousa, Marco, 3880-728 Ovar Ovar (PT); Cannizzaro, Andrea, 4410-527 Serzedo Vila Nova de Gaia (PT)
(74) Representative: Winter, Brandl - Partnerschaft mbB

(57) **Abstract**

Method and device for projecting a virtual image for calibration of an optical system having an image formation plane (4), comprising: a display (1) for displaying a calibration image; a concave mirror (3); a beam splitter (2) for receiving the calibration image and transmitting the calibration image to the concave mirror (3), and for receiving the mirrored calibration image and transmitting the mirrored calibration image to the image formation plane (4); a linear displacement stage (5) for linearly displacing the display (1) relative to the beam splitter (2) and/or for linearly displacing the image formation plane (4) relative to the beam splitter (2).

## Description

### Technical field

The present disclosure relates to a method and device for projecting a virtual image for calibration of an optical system having an image formation plane, comprising: a display for displaying a calibration image; a concave mirror; a beam splitter for receiving the calibration image and transmitting the calibration image to the concave mirror, and for receiving the mirrored calibration image and transmitting the mirrored calibration image to the image formation plane; a linear displacement stage for linearly displacing the display relative to the beam splitter and/or for linearly displacing the image formation plane relative to the beam splitter.

### Background

US8457879B2 discloses a housing for protecting an electronic device to be fitted to a motor vehicle, the housing comprising a plurality of shells forming a front and a cap, these being assembled together to define jointly an enclosure for housing an electronic card provided with remote connectors, wherein at least one first shell is formed from at least two elementary shells and said first shell includes, molded into it, at least one mobility means allowing relative movement between the elementary shells. The first shell is formed in one piece, the two elementary shells are situated side by side, each comprising a window for the passage and/or reception of a connector, and said mobility means comprises an elastically deformable member.

Document WO2015082717A1 discloses a system for guiding a person to a destination in a delimited area, said system comprising - localisation means arranged for locating a person in a delimited area, said person being associated to a dedicated identification sign, - storage means for storing information of the person in the delimited area, said information at least comprising a destination in the delimited area, - display means arranged in the delimited area for displaying guidance information for guiding the person in the delimited area, - processing means in connection with the localisation means, the storage means and the display means and arranged for calculating a path for the person to the destination and for forwarding to the display means dedicated information to guide the person via the calculated path to the destination, thereby exploiting the dedicated identification sign of the person.

CN101082777A discloses a method for detecting a projection objective lens, in particular to a method for detecting a projection objective lens of a photoetching machine in the manufacturing process of micro-devices such as semiconductor elements and liquid crystal display elements.

These facts are disclosed in order to illustrate the technical problem addressed by the present disclosure.

### General Description

This disclosure proposes a projection system comprising: a Curved Mirror, an Object, a Beam Splitter, a Linear Stage, wherein the light beam coming from the Object hits the beam splitter divides the light into two beams, one directed towards an opaque surface and the other towards the curved mirror; from this beam a projection image is created and now projected beam is reflected back to the beam splitter were the beam is once again divided into two beams one directed to the target and the other to the object. The linear stage enables precise adjustment of the distance between the object and the curved mirror to control the projection distance and magnification of the virtual image.

In an embodiment, the curved mirror has a parabolic shape.

In an embodiment, the beam splitter is a semi-reflective mirror. The Beam splitter allows the object to be imaged at 90° and, in some configurations, decrease the total length of the system.

In an embodiment, the projection system further comprises a control mechanism for adjusting the position of the linear stage to achieve the desired projection distance.

In an embodiment, the object is a reflective or transmissive chart or a display panel.

In an embodiment, the virtual image is magnified as the distance between the object and the curved mirror increases.

It is disclosed a method for projecting virtual images at controlled distances, comprising: a Curved Mirror, an Object, a Beam Splitter, a Linear Stage, wherein the light beam coming from the Object hits the beam splitter divides the light into two beams, one directed towards an opaque surface and the other towards the Curved Mirror; from this beam a projection image is created and now projected beam is reflected back to the Beam Splitter were the beam is once again divided into two beams one directed to the Target and the other to the Object. The linear stage enables precise adjustment of the distance between the Object and the Curved Mirror to control the projection distance and magnification of the virtual image.

In an embodiment, the optical concave mirror has a parabolic shape.

In an embodiment, the method for projecting virtual images at controlled distances further comprises calibrating the position of the linear stage based on desired projection characteristics.

In an embodiment, the virtual image is magnified by increasing the distance between the Object and the Curved Mirror.

It is disclosed a Device for projecting a virtual image for calibration of an optical system having an image formation plane, comprising: a display for displaying a calibration image; a concave mirror; a beam splitter for receiving the calibration image and transmitting the calibration image to the concave mirror, and for receiving the mirrored calibration image and transmitting the mirrored calibration image to the image formation plane; a linear displacement stage for linearly displacing the display relative to the beam splitter and/or for linearly displacing the image formation plane relative to the beam splitter.

It is disclosed a device for projecting a virtual image for calibration of an optical system having an image formation plane, comprising: a display for displaying a calibration image; a concave mirror; a beam splitter for receiving the calibration image and transmitting the calibration image to the concave mirror, and for receiving the mirrored calibration image and transmitting the mirrored calibration image to the image formation plane; a linear displacement stage for linearly displacing the display relative to the beam splitter and/or for linearly displacing the image formation plane relative to the beam splitter.

In an embodiment, the concave mirror can be a spheric mirror and/or a parabolic mirror.

In an embodiment, the beam splitter is a semi-reflective mirror, in particular a 90° image-forming semi-reflective mirror beam splitter.

In an embodiment, the optical system is a long-focus lens system, a telephoto lens, a photographic camera, a video camera or a surveillance camera.

In an embodiment, the virtual image is projected onto a calibration target placed at a predetermined distance from the optical system.

In an embodiment, a predetermined virtual distance generated can range from the mechanical distance between the beam splitter and the mirror to an infinity distance depending on mirror focal distance.

In an embodiment, the virtual image is generated based on computer-generated graphics or pre-recorded images.

In an embodiment, the linear displacement stage comprises one or more actuators, in particular, a micrometer actuator with travel range to go from the beam splitter to the mirror focal distance minus the distance between the beam splitter and the mirror.

It is also disclosed a method for calibrating an optical system having an image formation plane using a device for projecting a virtual image characterized by the device being according to any of the previous embodiments, the method comprising: generating a virtual image using a display; receiving the calibration image and transmitting the calibration image to the concave mirror; linearly displacing the display relative to a beam splitter and/or linearly displacing the image formation plane relative to the beam splitter.

In an embodiment, the light indicator or indicators are for indicating a symbol or symbols, wherein the black print layer comprises an opening or openings over for the light indicator or indicators, the dead-front layer covers the light indicator or indicators, and the masking IR layer comprises symbol-shaped opening or openings over the light indicator or indicators. The symbol may be textual or a graphic.

### Brief Description of the Drawings

The following figures provide preferred embodiments for illustrating the description and should not be seen as limiting the scope of invention.
**Figure 1** is a schematic representation of an embodiment of the balloons umbers refer to section 4.
**Figure 2** is a schematic representation of an embodiment of balloons umbers refer to section 4.

### Detailed Description

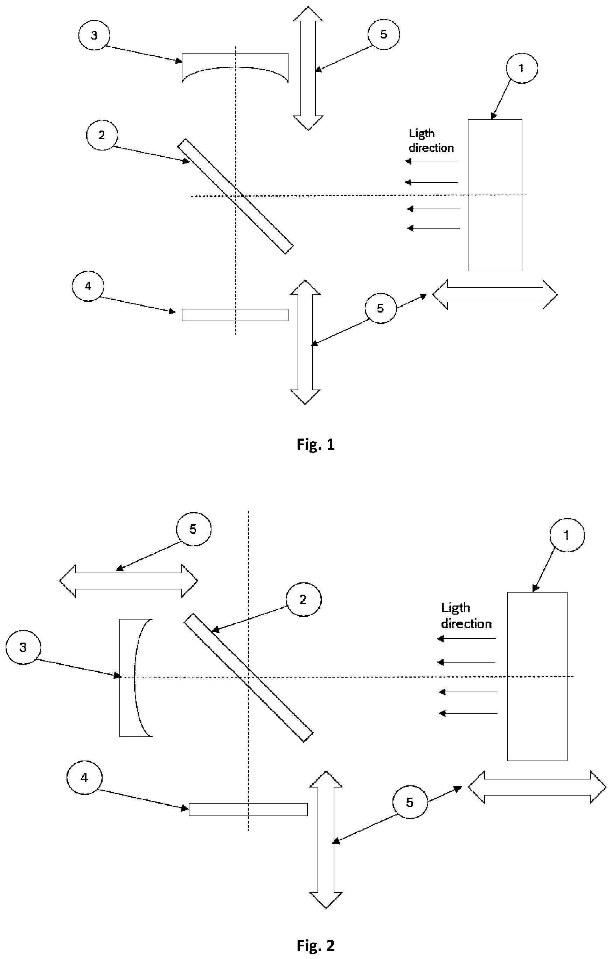

This disclosure proposes a optical setup for controlled projection of virtual images belongs to the field of optics and photonics. The details will be described with reference to **Figures 1** to **2****.**

As illustrated in **Figure 1****,** optics is a branch of physics that deals with the behavior and manipulation of light, while photonics focuses on the practical application of light in technologies such as optical communications, displays, imaging, and sensing. The optical setup described in the abstract combines principles from optics and photonics to achieve controlled projection distances and magnification of virtual images.

The present disclosure is a novel optical setup designed to project virtual images at controlled distances while allowing for adjustable magnification. Its main components include:
Object to be projected: Serves as the emitter of light for the projection. It can be reflective like a front lit paper or chart, transmissive like backlit acrylic sheets or reticles, or emissive, like LCD, OLED, ..., displays. The distance between the Object and the curved mirror is adjustable using a linear stage,
allowing precise control over the projection distance.
Beam Splitter: The Beam splitter allows the object to be imaged at 90º and, in some configurations, decrease the total length of the system.
Curved Mirror: The curved mirror is a key element of the setup. By adjusting the optical path length between the Object to be projected and the mirror the projection distance of the image can be controlled. The mirror also magnifies the image as the optical path increases. The use of an optical concave mirror ensures high-quality projection with minimal distortion.
Target: The target refers to the an external system like a persons eye, a camera, etc.. By varying the distance between the target and the Mirror one can adjust the image field of View.
Linear Stage: The linear stage is an additional component introduced to the setup. It provides precise movement and adjustment of either the Object or the mirror along a linear path. By controlling the position of the object or the mirror using the linear stage, the desired projection distance can be achieved with accuracy.

The combination of these components enables the optical setup to project virtual images at controlled distances with adjustable magnification. By varying the distance between the light source/display and the concave mirror using the linear stage, the setup offers flexibility and customization for different applications. The use of a curved mirror ensures high-quality projection, chromatic free aberrations with minimal distortion when compared to single element refractive systems. Overall, the invention provides a versatile and accurate solution for controlled projection of virtual images.

One implementation of the optical setup is to utilize it for projecting virtual images at different distances to assess image quality at various viewing distances. By adjusting the distance between the Object and the Curved Mirror using the linear stage, virtual images can be projected at desired distances. This enables comprehensive testing and evaluation of image quality parameters, such as sharpness, resolution, color accuracy, and distortion, at different viewing distances. The ability to precisely control the projection distance and magnification provides researchers, display manufacturers, and visual system developers with a reliable tool to analyze and optimize image quality characteristics for diverse applications, ranging from digital displays to augmented and virtual reality systems, as showed by Implementation Example 1: Virtual Image Projection for Image Quality Testing.

Another practical implementation of the optical setup is as an active alignment system for aligning a sensor and lens system. By integrating the optical setup with position sensing devices, feedback mechanisms, and control algorithms, the setup can be employed to dynamically align the sensor and lens components with high precision. The linear stage allows for fine adjustments of the distance between the Object and the Curved Mirror, facilitating accurate alignment of the sensor and lens to optimize imaging performance. This active alignment system finds applications in industries such as photography, microscopy, machine vision, and optical inspection systems, enabling automated and efficient alignment processes, reducing manual intervention, and improving overall system performance.

The optical setup can also be applied as an adaptive illumination system for projection mapping. By integrating the setup with image processing algorithms and depth mapping techniques, virtual images can be precisely projected onto complex surfaces and objects with varying distances and shapes. The ability to adjust the projection distance and magnification using the linear stage ensures accurate alignment and distortion correction, resulting in seamless and immersive projection mapping experiences for applications in entertainment, advertising, art installations, and architectural visualization.

The optical setup can be employed as a fundamental component of a holographic display system. By utilizing the setup in conjunction with holographic projection techniques and algorithms, virtual holographic images can be projected at controlled distances with adjustable magnification. The precise control over projection characteristics allows for realistic and captivating holographic displays for applications in 3D visualization, medical imaging, education, and entertainment.

These examples demonstrate the versatility and potential applications of the optical setup beyond image quality testing and sensor alignment. The setup's capability to project virtual images at controlled distances and adjust magnification opens up possibilities in various fields where precise projection and alignment are crucial for optimal performance.

The optical setup presented in this invention offers several novel features and significant advantages. Its main findings can be summarized as follows:

Novelty: The use of a Curved Mirror in combination with an Object, Beam Splitter, and Linear Stage provides a unique approach for controlled projection of virtual images. The adjustable distance between the Object and the curved mirror allows for precise control over the projection distance and magnification, offering versatility and customization.

Advantages: The use of a parabolic concave mirror eliminates spherical aberration, as well as chromatic aberrations from refractive systems, resulting in improved image quality with sharper and clearer virtual images. The setup allows for the projection of virtual images at different distances, facilitating image quality testing and evaluation. Additionally, it can be utilized as an active alignment system for precise alignment of sensor and lens components.

Potential Impact: The invention has the potential to revolutionize various fields and applications. In image quality testing, it provides researchers and display manufacturers with a reliable tool to evaluate image quality parameters at different viewing distances. As an active alignment system, it streamlines the alignment process in industries such as photography, microscopy, and machine vision, enhancing system performance. The adaptive illumination system enables projection mapping onto complex surfaces and objects, opening up new possibilities for entertainment, advertising, and architectural visualization. Furthermore, as a fundamental component of holographic display systems, it can contribute to advancements in 3D visualization, medical imaging, education, and entertainment.

Future Developments: The invention opens up avenues for future developments and enhancements. Further research can focus on optimizing the optical setup for specific applications, exploring advanced algorithms for image processing and alignment, and integrating additional technologies such as depth sensing or adaptive optics. The invention's versatility allows for adaptations in emerging fields like virtual and augmented reality, autonomous systems, and medical imaging, paving the way for exciting future developments and potential commercial applications.

In an embodiment, the device for projecting a virtual image for calibration of an optical system having an image formation plane **4,** comprising: a display **1** for displaying a calibration image; a concave mirror **3;** a beam splitter **2** for receiving the calibration image and transmitting the calibration image to the concave mirror **3,** and for receiving the mirrored calibration image and transmitting the mirrored calibration image to the image formation plane **4;** a linear displacement stage **5** for linearly displacing the display **1** relative to the beam splitter **2** and/or for linearly displacing the image formation plane **4** relative to the beam splitter **2.** The arrows next to the display **1** in **Figures 1** and **2** indicate the light direction of the calibration image emitted by the display **1.**

In conclusion, the optical setup presented in this invention introduces novel features, offers significant advantages, and has the potential to make a substantial impact in various fields. Its ability to control projection distance and magnification, eliminate spherical aberration, and facilitate image quality testing and alignment makes it a valuable tool with broad applications and possibilities for future advancements.

The term "comprising" whenever used in this document is intended to indicate the presence of stated features, integers, steps, components, but not to preclude the presence or addition of one or more other features, integers, steps, components or groups thereof.
The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. Device for projecting a virtual image for calibration of an optical system having an image formation plane (4), comprising:
a display (1) for displaying a calibration image;
a concave mirror (3);
a beam splitter (2) for receiving the calibration image and transmitting the calibration image to the concave mirror (3), and for receiving the mirrored calibration image and transmitting the mirrored calibration image to the image formation plane (4);
a linear displacement stage (5) for linearly displacing the display (1) relative to the beam splitter (2) and/or for linearly displacing the image formation plane (4) relative to the beam splitter (2).

2. Device for projecting a virtual image according to the previous claim wherein the concave mirror (3) is a spheric mirror.

3. Device for projecting a virtual image according any to the previous claims wherein the concave mirror (3) is a parabolic mirror.

4. Device for projecting a virtual image according any to the previous claims wherein the beam splitter (2) is a semi-reflective mirror, in particular a 90° image-forming semi-reflective mirror beam splitter.

5. Device for projecting a virtual image according any to the previous claims wherein the optical system is a long-focus lens system, a telephoto lens, a photographic camera, a video camera or a surveillance camera.

6. Device for projecting a virtual image according any to the previous claims wherein the virtual image is projected onto a calibration target placed at a predetermined distance from the optical system.

7. Device for projecting a virtual image according to the previous claim wherein a predetermined virtual distance is a range from the mechanical distance between the beam splitter and the mirror to an infinity distance depending on mirror focal distance.

8. Device for projecting a virtual image according any to the previous claims wherein the virtual image is generated based on computer-generated graphics or pre-recorded images.

9. Device for projecting a virtual image according any to the previous claims wherein linear displacement stage (5) comprises one or more actuators.

10. Device for projecting a virtual image according to the previous claim wherein the actuator is a micrometer actuator.

11. Device for projecting a virtual image according to the previous claim wherein the actuator is a linear micrometer actuator, a rotary micrometer actuator, a piezoelectric micrometer actuator, a manual micrometer actuator, or combinations thereof.

12. Method for calibrating an optical system having an image formation plane (4) using a device for projecting a virtual image **characterized by** the device being according to any of the claims 1-11, the method comprising:
generating a virtual image using a display (1);
receiving the calibration image and transmitting the calibration image to the concave mirror;
linearly displacing the display (1) relative to a beam splitter (2) and/or linearly displacing the image formation plane (4) relative to the beam splitter (2).
